# EUROPÄISCHE PATENTSCHRIFT

(11) **EP 3 741 263 B1**
(45) Veröffentlichungstag und Bekanntmachung des Hinweises auf die Patenterteilung: **01.12.2021**
(21) Anmeldenummer: 20173121.3
(22) Anmeldetag: 06.05.2020
(51) Int. Cl.: A47C 19/20, F16B 12/20, F16B 12/32

(54) **HOCHBETT**
LOFT BED
LIT-MEZZANINE

(30) Priorität: 22.05.2019 AT 504722019
(43) Veröffentlichungstag der Anmeldung: 25.11.2020
(73) Patentinhaber: Glasner, Jakob, 8010 Graz (AT)
(72) Erfinder: Glasner, Jakob, 8010 Graz (AT)
(74) Vertreter: Margotti, Herwig Franz

(56) Entgegenhaltungen:
- DE-A1-102015 001 581
- DE-C2- 1 066 336
- DE-U1-202006 009 842
- US-A1- 2019 024 691

## Beschreibung

Die Erfindung betrifft ein Hochbett gemäß dem Oberbegriff des Anspruchs 1.

In der heutigen Gesellschaft und den derzeitigen Lebensumständen besteht die Notwendigkeit, den vorhandenen Wohnraum effizient zu nutzen, da die Wohnungen tendenziell immer kleiner gebaut werden, oder sich aufgrund der stark steigenden Miet- und Kaufkosten für Immobilien immer weniger Menschen große Wohnungen leisten können. Eine weitere gesellschaftliche Entwicklung stellt die zunehmende Mobilität der Menschen dar, die zu häufigeren Umzügen führt. Daher besteht grundsätzlich der Bedarf nach Betten, die schnell und einfach auf- und abbaubar sind und im zusammengebauten Zustand eine hohe Stabilität aufweisen. Um den Wohnraum effizient zu nutzen, sind Hochbetten besonders geeignet, da sie die Möglichkeit bieten, auch den Raum unter dem Bett zu nutzen, entweder als Stauraum, als Spielecke, oder auch, um das Hochbett zu einem Stockbett auszubauen. Herkömmliche Hochbetten sind allerdings entweder wackelig, oder kompliziert im Aufbau, oder füllen den ganzen Raum durch ihr massives Erscheinungsbild. Schraubverbindungen von Hochbetten neigen dazu sich zu lockern, weshalb Hochbetten entweder an der Wand angeschraubt werden oder schwanken.

Das Dokument DE 10 2015 001581 A1 offenbart ein Verfahren zur Herstellung von Möbeln und ein Möbelstück aus einer Mehrzahl an zusammengesteckten Teilen in jeweils zueinander kompatiblen Schlitzen.

Das Dokument DE 10 66 336 offenbart ein zusammenlegbares Bett mit einem Rahmen, welcher mehrere durch Scharniere miteinander klappbar verbundene Teile aufweist.

Das Dokument US 2019/024691 A1 offenbart ein Hochbett, welches aus mehreren zusammensteckbaren Komponenten gefertigt ist.

Das Dokument DE 20 2006 009842 U1 offenbart eine zerlegbare Sitzbank, wobei das Sitzbrett der Sitzbank in Fußteilen durch verklemmen gehalten wird.

Es besteht daher nach wie vor ein Bedarf an Betten, insbesondere Hochbetten, die sich durch besondere Stabilität, reduzierten Materialverbrauch und die Möglichkeit des schnellen Auf- und Abbaus auszeichnen.

Die vorliegende Erfindung löst die gestellte Aufgabe und die oben erwähnten Probleme durch Bereitstellen eines Hochbettes mit den Merkmalen des Anspruchs 1. Diesem Hochbett liegt das Konstruktionsprinzip der Verbindung von Bettteilen mittels Klemmung zugrunde. Vorteilhafte Ausgestaltungen der Erfindung sind in den Unteransprüchen, der Beschreibung und den Zeichnungen dargelegt.

Das erfindungsgemäße Hochbett umfasst ein Bettgestell und Beine. Der Begriff "Bettgestell" wird hierin in breiter Auslegung verwendet und umfasst unter anderem Bettrahmen mit Lattenrosten oder anderen Matratzenauflagen sowie Bettkästen, bei denen in den Bettrahmen Bettzeugladen und ähnliches integriert sind. Das Bettgestell ist lösbar mit den Beinen verbindbar. Die Beine sind mit Klemmelementen versehen, die im mit dem Bettgestell verbundenen Zustand in Eingriff mit am Bettgestell ausgebildeten Gegenelementen sind, wobei durch auf das Bettgestell wirkende Gewichtskraft eine Klemmwirkung zwischen den Klemmelementen und den Gegenelementen gegeben ist. Die Gewichtskraft ergibt sich einerseits schon durch die auf das Bettgestell und darauf aufliegende Matratzen wirkende Schwerkraft und wird verstärkt, wenn eine oder mehrere Personen auf dem Hochbett liegen. Die Beine sind erfindungsgemäß im mit dem Bettgestell verbundenen Zustand durch die auf das Bettgestell wirkende Gewichtskraft relativ zum Bettgestell verkippbar, wodurch die Klemmwirkung gegeben ist, die für einen sicheren und stabilen Zusammenhalt von Bettgestell und Beinen sorgt.

Die Klemmwirkung durch relatives Verkippen von Beinen und Bettgestell zueinander wird verstärkt, indem die Beine im mit dem Bettgestell verbundenen Zustand zumindest abschnittsweise in zumindest einer Raumrichtung schräg auf eine Liegeebene des Bettgestells stehen. Unter dem Begriff "Liegeebene" ist allgemein eine Auflagefläche für eine Matratze zu verstehen. Die Liegeebene kann z.B. durch einen Lattenrost definiert werden, oder durch Platten oder Bretter im Bettgestell, auf denen die Matratze aufliegt. In der einfachsten Form des erfindungsgemäßen Hochbettes genügt es zur Erzielung der Klemmwirkung, wenn die Beine geneigt sind. Alternativ dazu können die Beine unter dem Hochbett aber auch gerade stehen und erst in einem Bereich unter dem Bettgestell schräg gestellt sein. Dadurch ergibt sich ein größerer Eingangsbereich unter das Hochbett, wobei die restliche Nutzfläche unter dem Hochbett gleich bleibt.

In einer leicht zusammenbaubaren und zerlegbaren Ausführungsform des erfindungsgemäßen Hochbettes sind zwei Beine über ein Kopfzwischenelement miteinander zu einem Kopfteil verbunden und sind zwei weitere Beine über ein Fußzwischenelement miteinander zu einem Fußteil verbunden, wobei die Klemmelemente entweder an den Beinen oder an den Zwischenelementen angeordnet sind.

Das erfindungsgemäße Hochbett ist besonders stabil, wenn das Kopfteil und das Fußteil durch Vorsehen zusätzlicher Streben rahmenförmig ausgebildet sind. Die Kopf- und Fußteile, insbesondere wenn sie rahmenförmig ausgeführt sind, können erfindungsgemäß zur Aufnahme zusätzlicher Bettelemente, insbesondere eines zweiten Bettgestells, oder einer Bettzeuglade, oder eines Tisch- oder Sitzelements ausgebildet sein.

Das erfindungsgemäße Hochbett ist im zusammengebauten Zustand durch die durch Gewichtskraft hervorgerufene Klemmwirkung zwischen Beinen und Bettgestell sehr stabil. Um sicherzustellen, dass die Beine nicht vom Bettgestell verschoben werden, beispielsweise durch unsachgemäßes Hantieren an den Beinen des Hochbettes oder durch spielende Kinder, sind in einer bevorzugten Ausführungsform des erfindungsgemäßen Hochbettes Sicherungselemente, vorzugsweise Schrauben, Splinte, Klammern oder Einkerbungen oder Vorsprünge am Bettgestell, vorgesehen, mit denen das Bettgestell mit den Beinen bzw. mit dem Kopfteil und dem Fußteil verschiebefest verbindbar ist. Diese Sicherungselemente müssen aber nur gegen das Verschieben der Bettteile schützen, müssen aber keine Tragkräfte aufnehmen und können daher entsprechend leicht und klein ausgeführt sein.

Gemäß verschiedener Ausführungsformen der Erfindung sind die Klemmelemente als Vorsprünge oder Vertiefungen, oder als Profile oder Schienen oder Streben oder Zwischenelemente ausgebildet, die mit den Gegenelementen in Eingriff bringbar sind. Weiters können gemäß der Erfindung die Gegenelemente als Bettgestellelemente, insbesondere deren Flächen, Kanten, Vertiefungen oder Vorsprünge, oder als Profile, Schienen oder Streben ausgebildet sein, die mit den Klemmelementen in Eingriff bringbar sind. Dabei ist weiters vorgesehen, dass die Klemmelemente und die Gegenelemente so ausgebildet sind, dass sie in Bezug aufeinander verschiebbar in Eingriff bringbar sind.

In einer Ausführungsform des erfindungsgemäßen Hochbettes sind Endbereiche der Beine als Klemmelemente ausgebildet und sind die Gegenelemente hülsenförmig ausgebildet, wobei die Endbereiche der Beine in die hülsenförmigen Gegenelemente einführbar sind.

Das erfindungsgemäße Hochbett wird nachfolgend anhand von beispielhaften Ausführungen unter Bezugnahme auf die Zeichnungen näher erläutert.
Fig. 1, Fig. 2 und Fig. 3 zeigen eine erste Ausführungsform eines erfindungsgemäßen Hochbettes in axiometrischen Ansichten vor und nach dem Zusammenbau und in einer Seitenansicht nach dem Zusammenbau.
Fig. 4 zeigt eine weitere Ausführungsform eines Kopf- oder Fußteils des erfindungsgemäßen Hochbetts in axiometrischer Ansicht.
Fig. 5, Fig. 6 und Fig. 7 zeigen ausschnittsweise den Zusammenbau des Kopf- oder Fußteils von Fig. 4 mit einem Bettgestell des erfindungsgemäßen Hochbettes.
Fig. 8 zeigt noch eine andere Ausführungsform eines Kopf- oder Fußteils des erfindungsgemäßen Hochbettes in axiometrischer Ansicht.
Fig. 9 und Fig. 10 zeigen ausschnittsweise den Zusammenbau des Kopf- oder Fußteils von

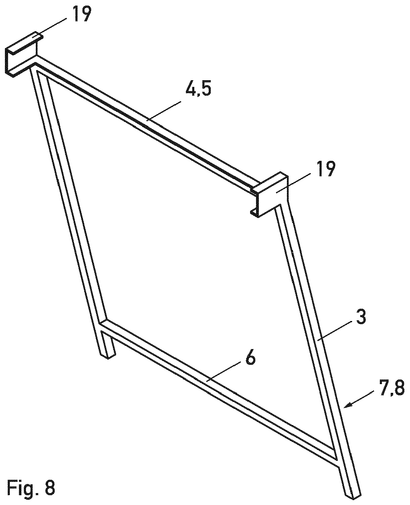

Fig. 8 mit einem Bettgestell des erfindungsgemäßen Hochbettes.

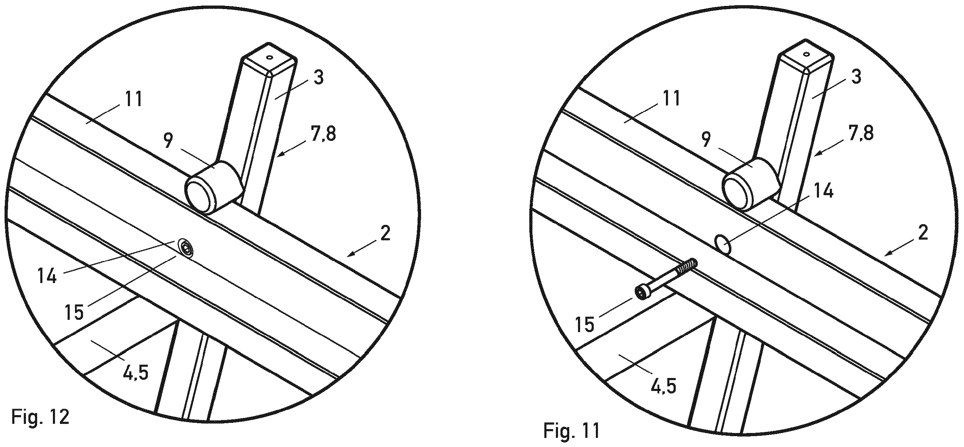

Fig. 11 und Fig. 12 zeigen ein Detail einer Ausführungsform des erfindungsgemäßen Hochbettes mit Sicherungselementen.

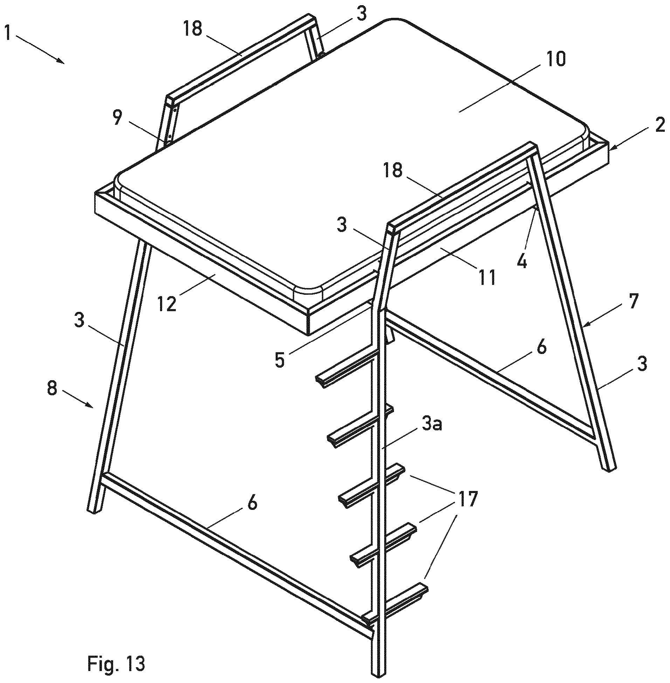

Fig. 13, Fig. 14 und Fig. 15 zeigen eine weitere Ausführungsform eines erfindungsgemäßen Hochbettes in axiometrischen Ansichten in verschiedenen Ausstattungsvarianten.

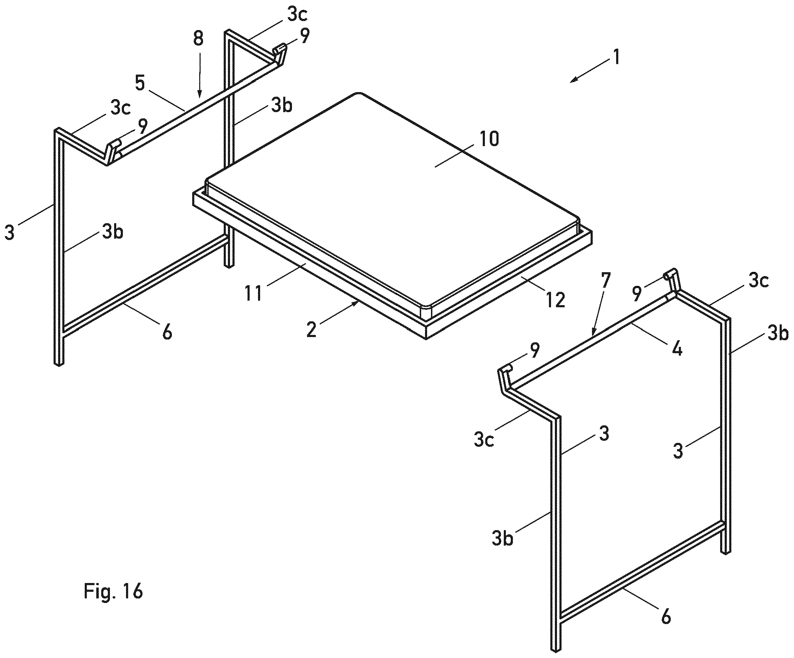

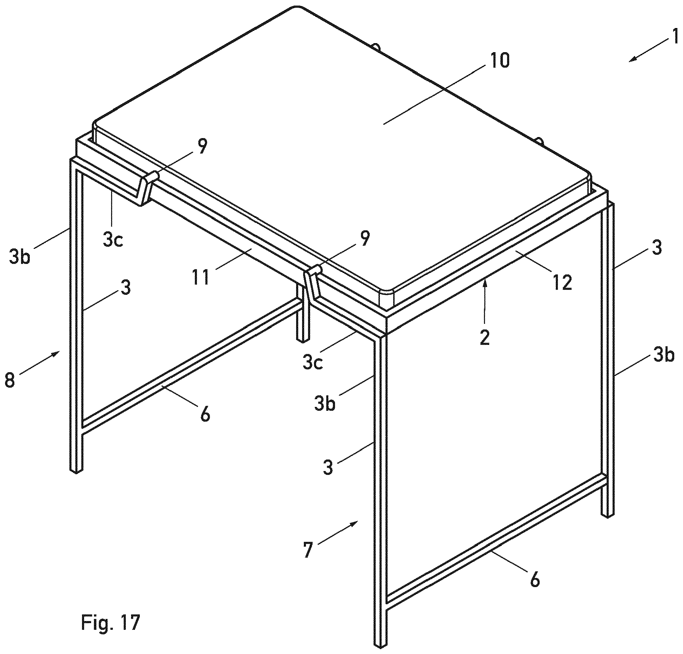

Fig. 16 und Fig. 17 zeigen noch eine Ausführungsform eines erfindungsgemäßen Hochbettes in axiometrischen Ansichten vor und nach dem Zusammenbau.

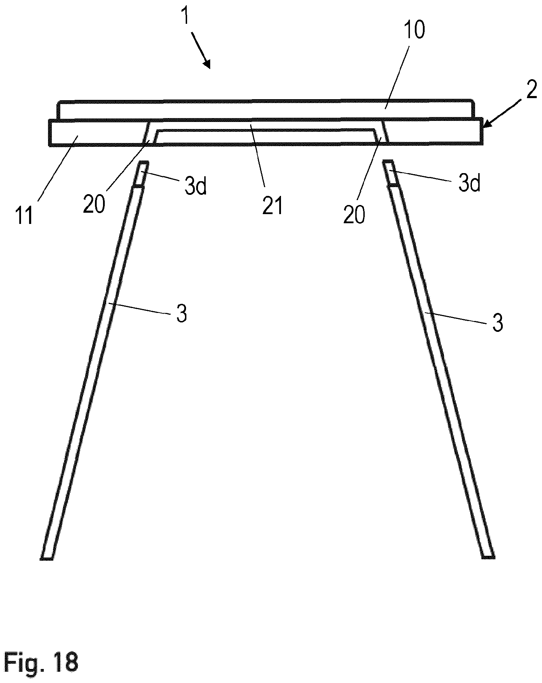

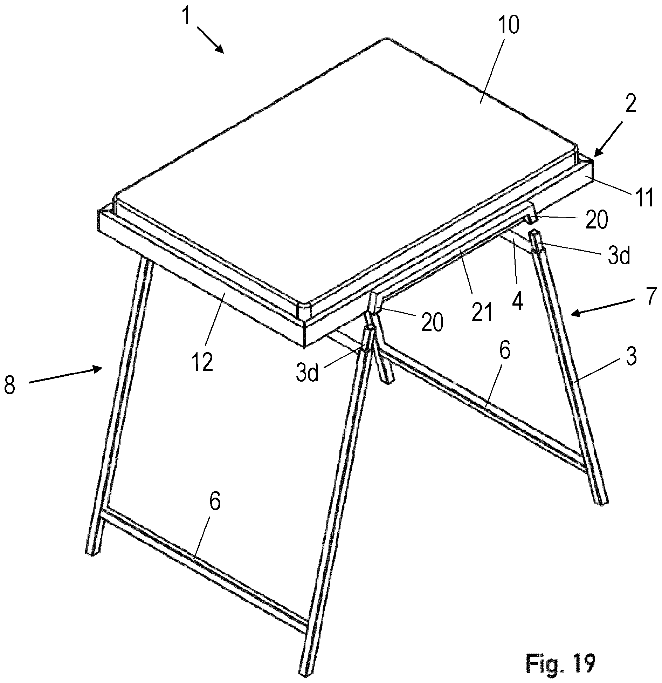

Fig. 18 und Fig. 19 zeigen wiederum eine weitere Ausführungsform eines erfindungsgemäßen Hochbettes in Seitenansicht bzw. in axiometrischer Ansicht vor dem Zusammenbau.

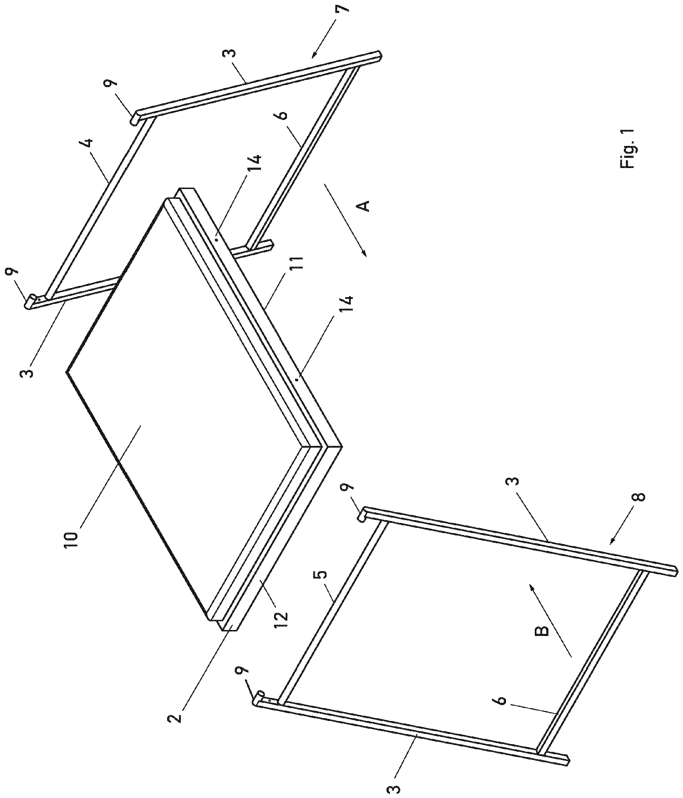

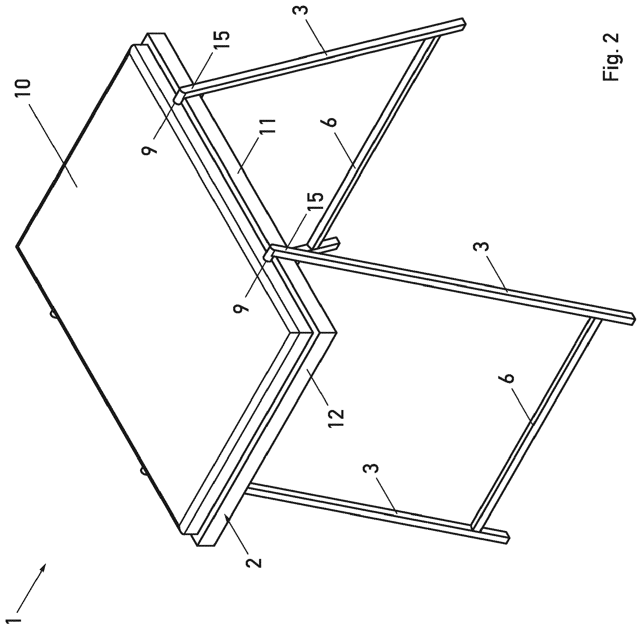

Zur Erläuterung der Erfindung wird zunächst auf die Figuren 1-3 Bezug genommen, die eine erste Ausführungsform eines erfindungsgemäßen Hochbettes 1 zeigen. Das Hochbett weist ein Bettgestell 2 auf, das in dieser Ausführung als einfacher Bettrahmen mit Längsbalken und Querbalken ausgeführt ist und einen nicht dargestellten Lattenrost enthält. Weiters umfasst das Hochbett 1 Beine 3, die mit dem Bettgestell 2 verbindbar und von ihm auf einfache Weise wieder entfernbar sind.

Zwei Beine 3 sind über ein Kopfzwischenelement 4 miteinander zu einem Kopfteil 7 verbunden, wobei das Kopfteil 7 durch Vorsehen einer zusätzlichen Strebe 6 rahmenförmig ausgebildet ist. Die zwei anderen Beine 3 des Hochbettes 1 sind über ein Fußzwischenelement 5 miteinander zu einem Fußteil 8 verbunden, wobei das Fußteil durch Vorsehen einer zusätzlichen Strebe 6 rahmenförmig ausgebildet ist.

Die Streben 6 des Kopfteils 7 und des Fußteils 8 können zur Aufnahme zusätzlicher Bettelemente verwendet werden, beispielsweise eines zweiten Bettgestells, oder einer Bettzeuglade.

Die Beine 3 sind mit Klemmelementen 9 versehen, die als nach innen gerichtete Vorsprünge ausgebildet sind und im mit dem Bettgestell 2 verbundenen Zustand in Eingriff mit am Bettgestell ausgebildeten Gegenelementen sind, in diesem Ausführungsbeispiel die Längsbalken 11. Das Kopfzwischenelement 4 und das Fußzwischenelement 5 des Kopfteils 7 und des Fußteils 8 dienen als weitere Klemmelemente, die im zusammengebauten Zustand des Hochbettes 1 klemmend an den Gegenelementen in Form der Längsbalken 11 angreifen.

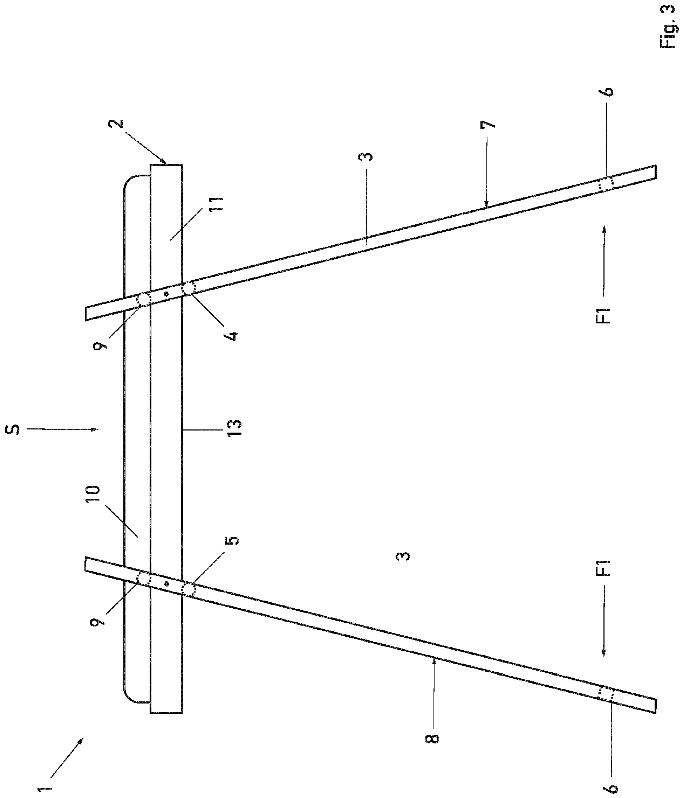

Das Hochbett 1 wird zusammengebaut, indem das Kopfteil 7 von außen nach innen in Richtung A auf die Längsbalken 11 des Bettgestells 2 aufgeschoben wird und das Fußteil 8 von außen nach innen in Richtung B auf die Längsbalken 11 des Bettgestells 2 aufgeschoben wird. Siehe Fig. 1. Der Abstand zwischen den Klemmelementen 9 und dem Kopf- und Fußzwischenelement 4, 5 ist größer als die Höhe des Längsbalkens 11 des Bettgestells 2. Dadurch ist einerseits das Aufschieben des Kopfteils 7 und des Fußteils 8 auf das Bettgestell 2 sehr einfach und ohne Kraftanwendung möglich, und andererseits bewirkt das Spiel zwischen den Längsbalken 11 und den Klemmelementen 9 bzw. dem Kopf- und Fußzwischenelement 4, 5 ein Verkippen der Beine 3 in Bezug auf das Bettgestell 2 und eine damit einhergehende Schrägstellung des Kopfteils 7 und des Fußteils 8 bzw. der Beine 3 in Bezug auf eine Liegeebene 13 des Bettgestells 2. Siehe Fig. 3. Dadurch wird durch auf das Bettgestell 2 wirkende Gewichtskraft S eine Klemmwirkung zwischen den Klemmelementen 9 bzw. den als Klemmelementen wirkenden Kopf- und Fußzwischenelementen 4, 5 und den als Gegenelementen wirkenden Längsbalken 11 hervorgerufen. Die Schrägstellung der Beine 3 führt aufgrund der Gewichtskraft S außerdem dazu, dass die Beine 3 in Richtung der Kräfte F1, F2 nach außen gedrückt werden, wodurch die Klemmkraft weiter verstärkt wird. Grundsätzlich gilt, dass die Klemmkräfte umso höher sind, je höher die auf das Bettgestell 2 wirkenden Gewichtskräfte sind. Alternativ zur dargestellten Ausführungsform könnten anstatt die Kopf- und Fußzwischenelemente 4, 5 als Klemmelemente zu verwenden, an den Beinen 3 zusätzliche dedizierte Klemmelemente ausgebildet sein und die Kopf- und Fußzwischenelemente 4, 5 unterhalb dieser zusätzlichen dedizierten Klemmelemente angeordnet werden.

Die Konstruktion des erfindungsgemäßen Hochbettes 1 macht sich somit die Erdanziehungskraft zu Nutze, wodurch das Eigengewicht des Bettgestells 2 bzw. der auf dem Hochbett liegenden Personen das Bettgestell 2 nach unten und damit die schräg stehenden Beine 3 zur Seite drückt. Je höher die Last, desto stärker verklemmt sich die Verbindung, wodurch ein Wackeln des Hochbetts unterbunden wird. Die Stabilität der Konstruktion ist nicht auf Verschraubungen angewiesen, die sich im Laufe der Zeit lockern könnten. In dieser Ausführungsform der Figuren 1 bis 3 ist das Hochbett 1 mit geraden Beinen 3 versehen, die durch die Verkippung schräg stehen. Gleichermaßen ist aber auch eine Ausführungsform des erfindungsgemäßen Hochbettes 1 mit gekrümmten oder geknickten Beinen vorgesehen, bei der die Beine unter dem Hochbett überwiegend senkrecht stehen und nur in einem oberen Abschnitt schräg gestellt sind. Daraus ergibt sich ein größerer Eingangsbereich unter dem Hochbett, ohne die restliche Nutzfläche unter dem Hochbett zu verkleinern.

Um beim Zusammenbau des Hochbettes 1 die Beine 3 bzw. das Kopfteil 7 und das Fußteil 8 in Bezug auf die Längserstreckung des Hochbettes 1 in eine definierte Lage zu bringen und darin zu halten, können Sicherungselemente 15 vorgesehen werden, z.B. Schrauben oder Stifte, die vorzugsweise genau im Rotationspunkt von Kopf- und Fußteil 7, 8 in Aufnahmen einsetzbar sind. Das Bettgestell weist entsprechende Bohrungen 14 an jenen Stellen auf, an denen das Kopf- und Fußteil 7, 8 platziert werden sollen, damit das Hochbett 1 höchste Stabilität erhält. Die Bohrung im Bettrahmen 2 ist so groß ausgeführt, dass keine Traglasten auf die Sicherungselemente 15 übertragen werden und sie nur die Positionen des Kopf- und Fußteils 7, 8 vorgeben. Siehe Figuren 11 und 12.

Die Rahmenkonstruktion des Kopf- und Fußteils 7, 8 lässt sich durch Steck- und/oder Schraubverbindungen für den Transport zerlegen, oder durch den Austausch einzelner Teile an unterschiedliche Raumhöhen anpassen.

Das Bettgestell 2, dessen Längsbalken 11 hauptsächlich die Last der Konstruktion tragen, wird z.B. durch Eckverschraubung der Längsbalken 11 mit den Querbalken 12 mittels Winkelelementen hergestellt. Auf die Eckverschraubung wirkt wegen der Konstruktion dabei keine relevante Traglast, weshalb sie nicht ausleiern kann. Die Last des im Bettgestell 2 aufliegenden Lattenrosts wird auch primär auf die Längsbalken 11 des Bettgestells übertragen.

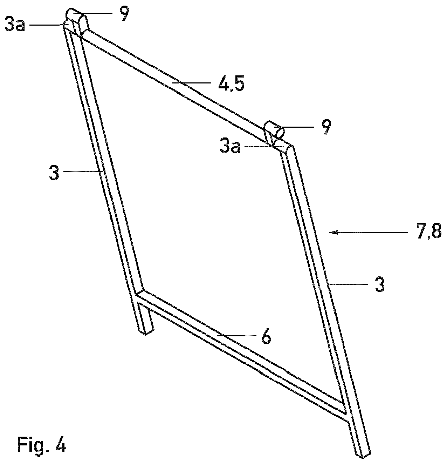

Fig. 4 zeigt eine weitere Ausführungsform eines Kopf- oder Fußteils 7, 8 des erfindungsgemäßen Hochbetts 1 in axiometrischer Ansicht. Das Kopf- oder Fußteil 7, 8 weist zwei Beine 3 auf, die voneinander beabstandet sind und rahmenförmig mit Kopf- oder Fußzwischenteilen 4, 5 und Streben 6 zusammengehalten werden. Vom Kopf- oder Fußzwischenteil 4, 5 erstrecken sich Klemmelemente 9 zuerst nach oben und dann nach außen. Weiters dient auch das obere Ende 3a eines jeden Beines 3 als Klemmelement.

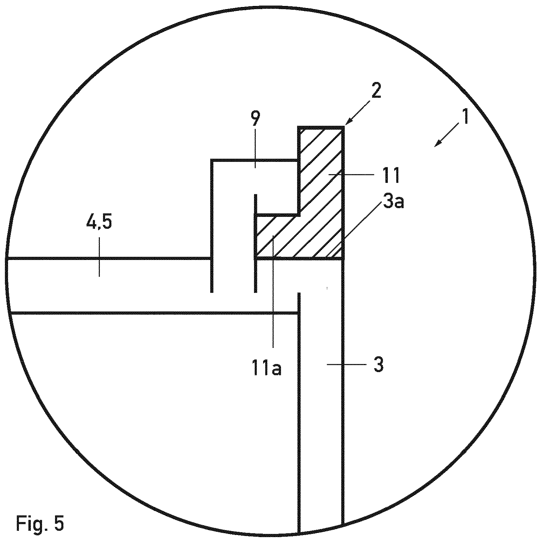

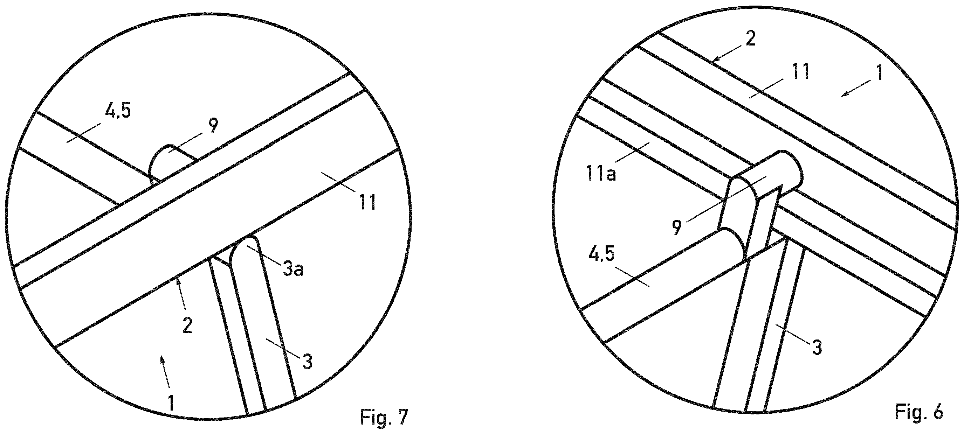

Fig. 5, Fig. 6 und Fig. 7 zeigen ausschnittsweise den Zusammenbau des Kopf- oder Fußteils 7, 8 von Fig. 4 mit einem Bettgestell 2 des erfindungsgemäßen Hochbettes 1. Das Hochbett 1 wird - gleich wie bei der ersten Ausführungsform - zusammengebaut, indem das Kopf- und Fußteil 7 von außen nach innen auf die Längsbalken 11 des Bettgestells 2 aufgeschoben werden. In dieser Ausführungsform weist das Bettgestell 2 Längsbalken 11 auf, die einen L-förmigen Querschnitt besitzen. Der sich nach außen erstreckende Abschnitt der Klemmelemente 9 umgreift den waagrechten Teil 11a des Längsbalkens 11 und liegt im zusammengebauten Zustand des Hochbettes 1 von oben auf dem waagrechten Teil 11a des Längsbalkens 11 auf. Das obere Ende 3a eines jeden Beins 3 drückt dagegen im zusammengebauten Zustand des Hochbettes 1 von unten gegen die Unterseite des Längsbalkens 11 und wirkt dadurch ebenfalls als Klemmelement, wobei der Längsbalken 11 als Gegenelement wirkt. Der übrige Aufbau des Hochbettes 1 ist gleich wie bei der ersten Ausführungsform und bedarf daher keiner nochmaligen Erläuterung.

Fig. 8 zeigt noch eine andere Ausführungsform eines Kopf- oder Fußteils 7, 8 des erfindungsgemäßen Hochbetts 1 in axiometrischer Ansicht. Das Kopf- oder Fußteil 7, 8 weist zwei Beine 3 auf, die voneinander beabstandet sind und rahmenförmig mit Kopf- oder Fußzwischenteilen 4, 5 und Streben 6 zusammengehalten werden. Vom oberen Ende der Beine 3 erstrecken sich Klemmelemente 19 in Form von U-Profilen.

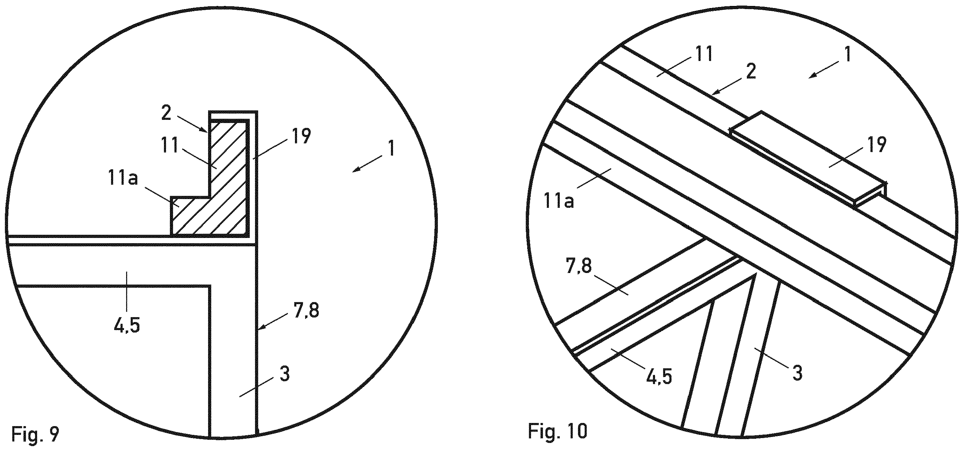

Fig. 9 und Fig. 10 zeigen ausschnittsweise den Zusammenbau des Kopf- oder Fußteils 7, 8 von Fig. 8 mit einem Bettgestell 2 des erfindungsgemäßen Hochbettes. Das Hochbett 1 wird - gleich wie bei der ersten Ausführungsform - zusammengebaut, indem das Kopf- und Fußteil 7 von außen nach innen auf die Längsbalken 11 des Bettgestells 2 aufgeschoben werden. In dieser Ausführungsform weist das Bettgestell 2 Längsbalken 11 auf, die einen L-förmigen Querschnitt besitzen. Der waagrechte Teil 11a des Längsbalkens 11 dient dabei als Auflage für einen Lattenrost. Es sind jedoch auch alternative Ausführungsform zur Halterung eines Lattenrosts oder dergleichen vorgesehen. Das Kopf- und Fußteil 7 werde so von außen auf die Längsbalken 11 des Bettgestells 2 aufgeschoben, dass die U-Profil-Klemmelemente 19 die Längsbalken 11 umgreifen und aufgrund der auf das Bettgestell 2 wirkenden Gewichtskraft und die schräg gestellten Beine 3 sich in Bezug auf die Längsbalken 11 verkippen und dadurch eine Klemmwirkung auf die Längsbalken 11 des Bettgestells 2 ausüben. Der übrige Aufbau des Hochbettes 1 ist gleich wie bei der ersten Ausführungsform und bedarf daher keiner nochmaligen Erläuterung.

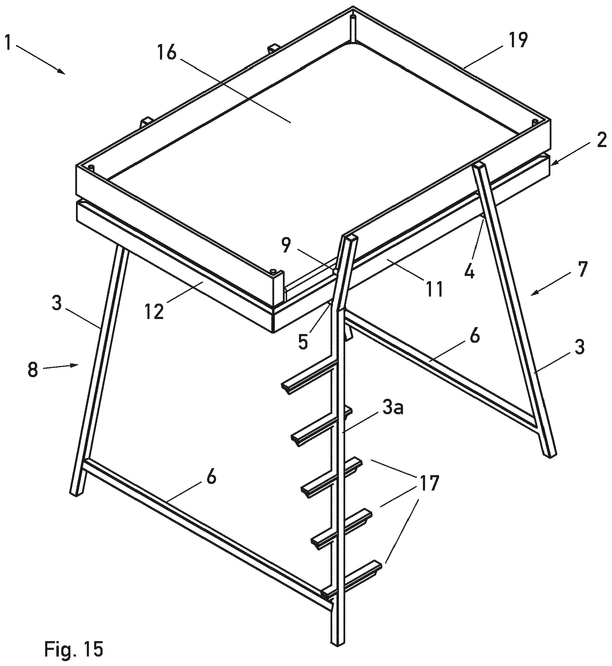

Fig. 13, Fig. 14 und Fig. 15 zeigen eine weitere Ausführungsform eines erfindungsgemäßen Hochbettes 1 in axiometrischen Ansichten in verschiedenen Ausstattungsvarianten, wobei Fig. 13 gewissermaßen die Basisversion darstellt. Diese Ausführungsform ähnelt jener der Figuren 1 bis 3, und es werden für gleiche oder ähnliche Teile dieselben Bezugszeichen verwendet wie bei der Ausführungsform gemäß der Figuren 1 bis 3. Das Hochbett 1 weist ein Bettgestell 2 auf, das als einfacher Bettrahmen mit Längsbalken 11 und Querbalken 12 ausgeführt ist und eine Auflagefläche 16 (siehe Fig. 15) für eine Matratze 10 enthält. Weiters umfasst das Hochbett 1 Beine 3, die mit dem Bettgestell 2 verbindbar und von ihm auf einfache Weise wieder entfernbar sind. Zwei Beine 3 sind über ein Kopfzwischenelement 4 miteinander zu einem Kopfteil 7 verbunden, wobei das Kopfteil 7 durch Vorsehen einer zusätzlichen Strebe 6 rahmenförmig ausgebildet ist. Die zwei anderen Beine 3 des Hochbettes 1 sind über ein Fußzwischenelement 5 miteinander zu einem Fußteil 8 verbunden, wobei das Fußteil durch Vorsehen einer zusätzlichen Strebe 6 rahmenförmig ausgebildet ist. Die Beine 3 sind mit Klemmelementen 9 versehen, die als nach innen gerichtete Vorsprünge ausgebildet sind und im mit dem Bettgestell 2 verbundenen Zustand in Eingriff mit am Bettgestell ausgebildeten Gegenelementen sind, in diesem Ausführungsbeispiel die Längsbalken 11. Das Kopfzwischenelement 4 und das Fußzwischenelement 5 des Kopfteils 7 und des Fußteils 8 dienen als weitere Klemmelemente, die im zusammengebauten Zustand des Hochbettes 1 klemmend an den Gegenelementen in Form der Längsbalken 11 angreifen. Der Zusammenbau des Hochbettes 1 erfolgt in gleicher Weise wie der Zusammenbau des Hochbettes 1 aus den Figuren 1 bis 3.

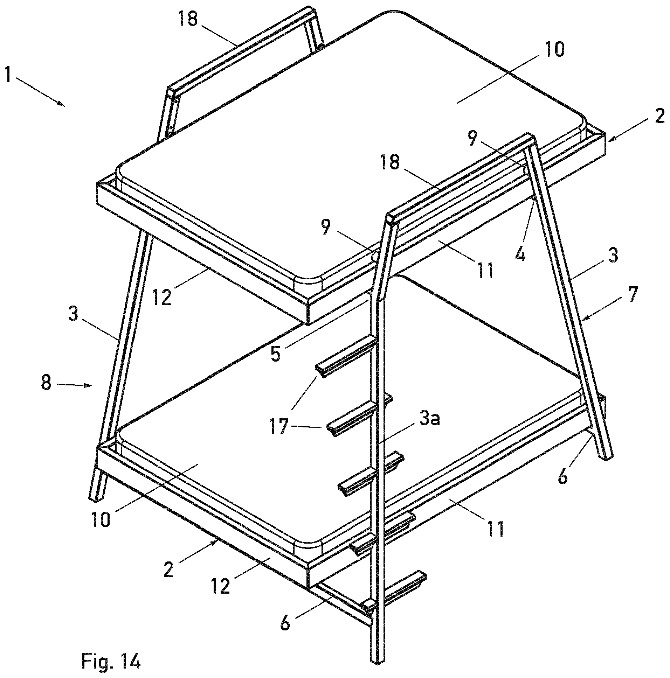

Bei der Ausführungsform des Hochbettes 1 gemäß den Figuren 13 bis 15 weist eines der Beine 3 einen schräg nach außen ausgestellten Beinabschnitt auf, von dem sich ein- oder beidseitig Leitersprossen 17 erstrecken, die gemeinsam eine Leiter bilden, die das Besteigen des Hochbettes 1 ermöglicht. Weiters sind beidseitig Längsgeländer 18 vorgesehen, wobei jedes Längsgeländer 18 an den zwei auf derselben Seite des Hochbettes 1 angeordneten Beinen 3 montiert werden, nachdem die Beine in die vorgesehene Position gebracht worden sind. Diese Längsgeländer 18 erfüllen neben einer Sicherheitsfunktion gegen Herunterfallen von Personen zusätzlich auch die Funktion, dass die Beine 3 zueinander in vorgegebenem Abstand gehalten werden. Dabei ist es allerdings bevorzugt, dass die Längsgeländer 18 in geringem Umfang in Bezug auf zumindest eines der Beine 3, an denen sie montiert sind, verschiebbar sind (z.B. durch Montage mittels Langloch), um nicht der Klemmwirkung der Beine 3 gegen das Bettgestell 2 entgegenzuwirken. In der Ausstattungsvariante von Fig. 15 ist anstelle der Längsgeländer 18 ein auf dem Bettgestell 2 montierter, den Bettrahmen 2 umgebender Sicherheitsrahmen 19 montiert, der gegen Herunterfallen von Personen schützt. Fig. 14 wiederum zeigt eine Ausführungsform des Hochbettes 1 als Stockbett, indem die Streben 6 des Kopfteils 7 und des Fußteils 8 zur Aufnahme eines zweiten Bettgestells 2 verwendet werden.

Fig. 16 und Fig. 17 zeigen noch eine weitere Ausführungsform eines erfindungsgemäßen Hochbettes 1 in axiometrischen Ansichten vor und nach dem Zusammenbau. Diese Ausführungsform des Hochbettes 1 unterscheidet sich von den vorstehenden beschriebenen Ausführungsformen dadurch, dass jedes Bein 3 zwei im Winkel zueinander angeordnete Beinabschnitte 3b, 3c aufweist. Dadurch können die unteren Beinabschnitte 3b im zusammengebauten Zustand des Hochbettes 1 gerade stehen, wodurch sich ein größerer Eingangsbereich unter das Hochbett 1 ergibt als bei schräggestellten Beinen. Andererseits bleibt die Klemmwirkung zwischen Beinen 3 und Bettgestell 2 trotzdem im vollen Umfang erhalten, weil die oberen Beinabschnitte 3c schräg oder waagrecht stehen und dadurch jegliche auf das Bettgestell 2 wirkende Gewichtskraft zu einer Verstärkung der Klemmwirkung führt.

Fig. 16 und Fig. 17 zeigen noch eine weitere Ausführungsform eines erfindungsgemäßen Hochbettes 1 in axiometrischen Ansichten vor und nach dem Zusammenbau. Diese Ausführungsform des Hochbettes 1 unterscheidet sich von den vorstehenden beschriebenen Ausführungsformen dadurch, dass jedes Bein 3 zwei im Winkel zueinander angeordnete Beinabschnitte 3b, 3c aufweist. Dadurch können die unteren Beinabschnitte 3b im zusammengebauten Zustand des Hochbettes 1 gerade stehen, wodurch sich ein größerer Eingangsbereich unter das Hochbett 1 ergibt als bei schräggestellten Beinen. Andererseits bleibt die Klemmwirkung zwischen Beinen 3 und Bettgestell 2 trotzdem im vollen Umfang erhalten, weil die oberen Beinabschnitte 3c schräg oder waagrecht stehen und dadurch jegliche auf das Bettgestell 2 wirkende Gewichtskraft zu einer Verstärkung der Klemmwirkung führt.

Fig. 18 und Fig. 19 zeigen wiederum eine weitere Ausführungsform eines erfindungsgemäßen Hochbettes 1 in Seitenansicht (Fig. 18) und in axiometrischer Ansicht (Fig. 19) vor dem Zusammenbau. Diese Ausführungsform des Hochbettes 1 unterscheidet sich von den vorstehenden beschriebenen Ausführungsformen dadurch, dass die Gegenelemente 20 als Hülsen mit nach unten offenen Enden ausgebildet sind, deren Durchmesser so dimensioniert ist, dass obere Endbereiche 3d der Beine 3, die die Klemmelemente bilden, leicht, z.B. in Spielpassung, in die hülsenförmigen Gegenelemente 20 eingeführt werden können. Wenn die Gegenelemente 20 und/oder Abschnitte der Beine 3 schräg stehen oder die Beine 3 abgewinkelt sind, so ergibt sich im zusammengebauten Zustand eine Klemmwirkung zwischen den oberen Endbereichen 3d der Beine 3 und den sie umgebenden hülsenförmigen Gegenelementen 20. Die hülsenförmigen Gegenelemente 20 können optional an einem Rahmen 21 montiert sein bzw. dessen Enden bilden, wobei der Rahmen wiederum am Bettgestell 2 befestigt sein kann, wie im vorliegenden Ausführungsbeispiel dargestellt.

## Patentansprüche

1. Hochbett (1), mit einem Bettgestell (2) und Beinen (3), wobei das Bettgestell (2) lösbar mit den Beinen (3) verbindbar ist, wobei die Beine (3) mit Klemmelementen (9, 19, 3d) versehen sind, die im mit dem Bettgestell (2) verbundenen Zustand in Eingriff mit am Bettgestell (2) ausgebildeten Gegenelementen (11, 20) sind, wobei durch auf das Bettgestell (2) wirkende Gewichtskraft (S) eine Klemmwirkung zwischen den Klemmelementen (9, 19, 3d) und den Gegenelementen (11, 20) gegeben ist, wobei die Beine (3) im mit dem Bettgestell (2) verbundenen Zustand durch die auf das Bettgestell (2) wirkende Gewichtskraft (S) relativ zum Bettgestell (2) verkippbar sind, wodurch die Klemmwirkung gegeben ist.

2. Hochbett (1) nach Anspruch 1, **dadurch gekennzeichnet, dass** die Beine (3) im mit dem Bettgestell (2) verbundenen Zustand zumindest abschnittsweise in zumindest einer Raumrichtung schräg auf eine Liegeebene (13) des Bettgestells (2) stehen.

3. Hochbett (1) nach Anspruch 1 oder 2, **dadurch gekennzeichnet, dass** zwei Beine (3) über ein Kopfzwischenelement (4) miteinander zu einem Kopfteil (7) verbunden sind und zwei weitere Beine (3) über ein Fußzwischenelement (5) miteinander zu einem Fußteil (8) verbunden sind, wobei die Klemmelemente (9, 19, 3d) an den Beinen (3) und/oder an den Zwischenelementen (4, 5) ausgebildet sind.

4. Hochbett (1) nach Anspruch 3, **dadurch gekennzeichnet, dass** das Kopfteil (7) und das Fußteil (8) durch Vorsehen zusätzlicher Streben (6) rahmenförmig ausgebildet sind.

5. Hochbett (1) nach Anspruch 3 oder 4, **dadurch gekennzeichnet, dass** das Kopfteil (7) und das Fußteil (8) zur Aufnahme zusätzlicher Bettelemente, insbesondere eines zweiten Bettgestells, oder einer Bettzeuglade, oder eines Tisch- oder Sitzelements ausgebildet sind.

6. Hochbett (1) nach einem der vorhergehenden Ansprüche, **dadurch gekennzeichnet, dass** das Hochbett (1) Sicherungselemente (15), vorzugsweise Schrauben, Splinte, Klammern oder Einkerbungen oder Vorsprünge am Bettgestell (2), aufweist, mit denen das Bettgestell (2) mit den Beinen (3) bzw. mit dem Kopfteil (7) und dem Fußteil (8) verschiebefest verbindbar ist.

7. Hochbett (1) nach einem der vorhergehenden Ansprüche, **dadurch gekennzeichnet, dass** die Klemmelemente (9, 19, 3d) als Vorsprünge oder Vertiefungen, oder als Profile oder Schienen oder Streben oder Zwischenelemente (4, 5) ausgebildet sind, die mit den Gegenelementen (11, 20) in Eingriff bringbar sind.

8. Hochbett (1) nach einem der vorhergehenden Ansprüche, **dadurch gekennzeichnet, dass** die Gegenelemente als Bettgestellelemente (11), insbesondere deren Flächen, Kanten, Vertiefungen oder Vorsprünge, oder als Profile, Schienen oder Streben ausgebildet sind, die mit den Klemmelementen (9, 19, 4, 5) in Eingriff bringbar sind.

9. Hochbett (1) nach Anspruch 7 oder 8, **dadurch gekennzeichnet, dass** die Klemmelemente (9, 19, 4, 5) und die Gegenelemente (11) so ausgebildet sind, dass sie in Bezug aufeinander verschiebbar in Eingriff bringbar sind.

10. Hochbett (1) nach einem der vorhergehenden Ansprüche, **dadurch gekennzeichnet, dass** zumindest eines der Beine (3) einen Beinabschnitt (3a) aufweist, der mit Leitersprossen (17) versehen ist, wobei vorzugsweise dieser Beinabschnitt (3a) in Bezug auf das Bettgestell (2) nach außen ausgestellt ist

11. Hochbett (1) nach einem der vorhergehenden Ansprüche, **dadurch gekennzeichnet, dass** die Beine (3) zwei im Winkel zueinander angeordnete Beinabschnitte (3b, 3c) aufweisen.

12. Hochbett (1) nach einem der vorhergehenden Ansprüche, **dadurch gekennzeichnet, dass** das Hochbett (1) mit Längsgeländer (18) oder mit einem den Bettrahmen (2) umgebenden Sicherheitsrahmen (19) ausgestattet ist.

13. Hochbett (1) nach einem der vorhergehenden Ansprüche, **dadurch gekennzeichnet, dass** Endbereiche (3d) der Beine (3) als Klemmelemente ausgebildet sind, und die Gegenelemente (20) hülsenförmig ausgebildet sind, wobei die Endbereiche (3d) der Beine (3) in die hülsenförmigen Gegenelemente (20) einführbar sind.

## Claims

1. A loft bed (1) comprising a bed frame (2) and legs (3), the bed frame (2) being releasably connectable to the legs (3), the legs (3) being provided with clamping elements (9, 19, 3d) which, in the state of being connected to the bed frame (2), are engaged with counter elements (11, 20) formed on the bed frame (2), wherein a clamping effect between the clamping elements (9, 19, 3d) and the counter elements (11, 20) is provided due to a weight force (S) acting on the bed frame (2), wherein the legs (3), in the state of being connected to the bed frame (2), are tiltable relative to the bed frame (2) due to the weight force (S) acting on the bed frame (2), whereby the clamping effect is provided.

2. A loft bed (1) according to claim 1, **characterized in that** the legs (3), in the state of being connected to the bed frame (2), are positioned, in at least one spatial direction, obliquely to a lying plane (13) of the bed frame (2) at least in sections.

3. A loft bed (1) according to claim 1 or 2, **characterized in that** two legs (3) are interconnected via an intermediate head element (4) to form a head part (7) and two further legs (3) are interconnected via an intermediate foot element (5) to form a foot part (8), the clamping elements (9, 19, 3d) being formed on the legs (3) and/or on the intermediate elements (4, 5).

4. A loft bed (1) according to claim 3, **characterized in that**, by providing additional rods (6), the head part (7) and the foot part (8) are designed in the shape of frames.

5. A loft bed (1) according to claim 3 or 4, **characterized in that** the head part (7) and the foot part (8) are designed for accommodating additional bed elements, in particular a second bed frame, or a bedding drawer, or a table or seat element.

6. A loft bed (1) according to any of the preceding claims, **characterized in that** the loft bed (1) has securing elements (15), preferably screws, split pins, clips or notches or projections on the bed frame (2), by means of which the bed frame (2) is connectable to the legs (3) or, respectively, the head part (7) and the foot part (8) in a non-displaceable manner.

7. A loft bed (1) according to any of the preceding claims, **characterized in that** the clamping elements (9, 19, 3d) are designed as projections or indentations, or as profiles or rails or rods or intermediate elements (4, 5), which are engageable with the counter elements (11,20).

8. A loft bed (1) according to any of the preceding claims, **characterized in that** the counter elements are designed as bed frame elements (11), in particular their surfaces, edges, indentations or projections, or as profiles, rails or rods, which are engageable with the clamping elements (9, 19, 4, 5).

9. A loft bed (1) according to claim 7 or 8, **characterized in that** the clamping elements (9, 19, 4, 5) and the counter elements (11) are designed in such a way that they can be brought into displaceable engagement with respect to one another.

10. A loft bed (1) according to any of the preceding claims, **characterized in that** at least one of the legs (3) has a leg section (3a) which is provided with ladder rungs (17), said leg section (3a) preferably being flared toward the outside in relation to the bed frame (2).

11. A loft bed (1) according to any of the preceding claims, **characterized in that** the legs (3) have two leg sections (3b, 3c) arranged at an angle relative to each other.

12. A loft bed (1) according to any of the preceding claims, **characterized in that** the loft bed (1) is equipped with a longitudinal railing (18) or with a safety frame (19) surrounding the bed frame (2).

13. A loft bed (1) according to any of the preceding claims, **characterized in that** end regions (3d) of the legs (3) are designed as clamping elements, and the counter elements (20) have sleeve-shaped designs, the end regions (3d) of the legs (3) being insertable into the sleeve-shaped counter elements (20).

## Revendications

1. Lit-mezzanine (1) avec un cadre de lit (2) et des pieds (3), dans lequel le cadre de lit (2) peut être relié de façon amovible avec les pieds (3), dans lequel les pieds (3) sont prévus avec des éléments de serrage (9, 19, 3d) qui, lorsqu'ils sont reliés au cadre de lit (2), sont en prise avec des contre-éléments (11, 20) formés sur le cadre de lit (2), dans lequel un effet de serrage est produit entre les éléments de serrage (9, 19, 3d) et les contre-éléments (11, 20) par une force de pesanteur (S) agissant sur le cadre de lit (2), et dans lequel les pieds, lorsqu'ils sont reliés au cadre de lit (2), peuvent basculer par rapport au cadre de lit (2) sous l'effet de la force de pesanteur (S) agissant sur le cadre de lit (2), ce qui produit l'effet de serrage.

2. Lit-mezzanine (1) selon la revendication 1, **caractérisé en ce que** les pieds (3), lorsqu'ils sont reliés au cadre de lit (2), reposent, au moins sur un segment, en biais dans au moins une direction spatiale sur un plan d'extension (13) du cadre de lit (2).

3. Lit-mezzanine (1) selon la revendication 1 ou 2, **caractérisé en ce que** deux pieds (3) sont reliés entre eux par un élément intermédiaire de tête (4) au niveau d'une partie de tête (7) et deux pieds (3) sont reliés entre eux par un élément intermédiaire de pied (5) au niveau d'une partie de pied (8), les éléments de serrage (9, 19, 3d) étant formés sur les pieds (3) et/ou sur les éléments intermédiaires (4, 5).

4. Lit-mezzanine (1) selon la revendication 3, **caractérisé en ce que** la partie de tête (7) et la partie de pied (8) sont configurées en forme de cadres en prévoyant des entretoises (6) supplémentaires.

5. Lit-mezzanine (1) selon la revendication 3 ou 4, **caractérisé en ce que** la partie de tête (7) et la partie de pied (8) sont configurées pour recevoir des éléments de lit supplémentaires, en particulier un deuxième cadre de lit ou un tiroir à literie ou un élément de table ou de siège.

6. Lit-mezzanine (1) selon une des revendications précédentes, **caractérisé en ce que** le lit-mezzanine (1) possède des éléments de sécurisation (15), de préférence des vis, des goupilles, des pinces ou des encoches ou des saillies au niveau du cadre de lit (2), avec lesquels le cadre de lit (2) peut être relié de façon non coulissante avec les pieds (3) ou avec la partie de tête (7) et la partie de pied (8).

7. Lit-mezzanine (1) selon une des revendications précédentes, **caractérisé en ce que** les éléments de serrage (9, 19, 3d) sont configurés comme des saillies ou des renfoncements ou comme des profilés ou des rails ou des entretoises ou des éléments intermédiaires (5) qui peuvent être mis en prise avec les contre-éléments (11, 20).

8. Lit-mezzanine (1) selon une des revendications précédentes, **caractérisé en ce que** les contre-éléments sont configurés comme des éléments de cadre de lit (11), en particulier leurs surfaces, leurs arêtes, leurs renfoncements ou leurs saillies, ou comme des profilés, des rails ou des entretoises qui peuvent être mis en prise avec les éléments de serrage (9, 19, 4, 5).

9. Lit-mezzanine (1) selon la revendication 7 ou 8, **caractérisé en ce que** les éléments de serrage (9, 19, 4, 5) et les contre-éléments (11) sont configurés de sorte qu'ils peuvent être mis en prise de façon coulissante les us par rapport aux autres.

10. Lit-mezzanine (1) selon une des revendications précédentes, **caractérisé en ce qu'**au moins un des pieds (3) possède un segment de pied (3a) qui est prévu avec des échelons (17), ce segment de pied (3a) étant de préférence orienté vers l'extérieur par rapport au cadre de lit (2).

11. Lit-mezzanine (1) selon une des revendications précédentes, **caractérisé en ce que** les pieds (3) possèdent deux segments de pied (3b, 3c) formant un angle entre eux.

12. Lit-mezzanine (1) selon une des revendications précédentes, **caractérisé en ce que** le lit-mezzanine (1) est équipé avec des rambardes longitudinales (18) ou avec un cadre de sécurité (19) entourant le cadre de lit (2).

13. Lit-mezzanine (1) selon une des revendications précédentes, **caractérisé en ce que** des zones d'extrémité (3d) des pieds (3) sont configurées comme des éléments de serrage et que les contre-éléments (20) sont configurés en forme de manchons, les zones terminales (3d) des pieds (3) pouvant être insérées dans les contre-éléments (20) en forme de manchons.
